# EUROPÄISCHE PATENTANMELDUNG

(11) **EP 3 804 533 A1**
(43) Veröffentlichungstag der Anmeldung: **14.04.2021**
(21) Anmeldenummer: 20186761.1
(22) Anmeldetag: 20.07.2020
(51) Int. Cl.: A23N 12/10, A47J 37/04

(54) **RÖSTVORRICHTUNG**

(30) Priorität: 09.10.2019 DE 102019127137
(71) Anmelder: van der Vliet, Albert, 1831BA Koedijk (NL)
(72) Erfinder: van der Vliet, Albert, 1831BA Koedijk (NL)
(74) Vertreter: Schneider, Sascha

(57) **Zusammenfassung**

Die vorliegende Erfindung betrifft eine Röstvorrichtung.

## Beschreibung

Die vorliegende Erfindung betrifft eine Röstvorrichtung. Herkömmliche Röstvorrichtungen arbeiten beispielsweise mit Heißluftanlagen und benötigen daher sehr viel Platz, sind sehr ineffizient, da viel Energie ungenutzt bleibt, und sind sehr aufwendig zu betreiben.

Es ist daher die Aufgabe der vorliegenden Erfindung, eine Röstvorrichtung bereitzustellen, die die Nachteile des Stands der Technik nicht aufweist.

Diese Aufgabe wird mit den Merkmalen des Patentanspruchs 1 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. Bei angegebenen Wertebereichen sollen auch innerhalb der genannten Grenzen liegende Werte als Grenzwerte offenbart gelten und in beliebiger Kombination beanspruchbar sein.

Erfindungsgemäß vorgesehen ist eine Röstvorrichtung, aufweisend eine Trommel zur Aufnahme von Röstgut, mindestens einen elektrischen Heizstab zur Röstung des Röstguts und eine Antriebseinrichtung zur Drehung der Trommel.

Die erfindungsgemäße Röstvorrichtung ist vorteilhaft mobil, da sie in kleinen Abmessungen herstellbar ist. Sie kann eine Länge von 20-50 cm haben und eine Breite von 10-30 cm. Die Höhe beträgt nicht mehr als 10-30 cm.

Dadurch kann die Röstvorrichtung bequem im Haushalt benutzt werden und beispielsweise auf einen Tisch oder eine Arbeitsplatte gestellt werden. Da die Hitze effizient genutzt wird, kann die Röstvorrichtung gefahrlos im Privathaushalt benutzt werden. Eine unerwünschte starke Erhitzung der Röstvorrichtung kann verhindert werden.

Da die Röstvorrichtung elektrisch beheizt werden kann, ist sie einfach an den Haushaltsstrom anzuschließen und kann überall dort benutzt werden, wo elektrischer Strom zur Verfügung steht.

Das Röstgut umfasst z.B. Nüsse, Mandeln oder ähnliche röstbare Lebensmittel. Die Füllmenge beträgt bevorzugt weniger als 300g.

Der mindestens eine elektrische Heizstab erzeugt genügend Wärme, um das Röstgut gleichmäßig zu rösten. Die Zeit für eine ausreichende Röstung beträgt lediglich wenige Minuten.

Die Antriebseinrichtung arbeitet bevorzugt elektrisch und kann dadurch von der gleichen Stromquelle wie der mindestens eine elektrische Heizstab betrieben werden. Beispielsweise wird ein Elektromotor zur Drehung der Trommel verwendet.

Die Trommel ist hohl ausgebildet und weist eine Mantelfläche und zwei Stirnseiten auf, die die Mantelfläche begrenzen. Die Trommel ist um eine Drehachse drehbar, wobei die Drehachse bevorzugt mit der Längsachse der Trommel identisch ist.

Der mindestens eine Heizstab ist bevorzugt in einem Abstand von 5-30 mm von der Mantelfläche der Trommel angeordnet. Dadurch kann vorteilhaft eine relativ schnelle Röstung erfolgen und ein Verbrennen des Röstguts wird verhindert.

Der mindestens eine Heizstab erstreckt sich bevorzugt entlang mehr als 50% der Länge der Trommel, bevorzugt mehr als 60%, weiter bevorzugt mehr als 70%, noch weiter bevorzugt mehr als 80% und am meisten bevorzugt mehr als 90%. Hierdurch kann vorteilhaft eine gleichmäßige Erwärmung des Röstguts erfolgen.

Bevorzugt ist der Abstand des mindestens einen Heizstabs von der Trommel über die Länge des Heizstabs konstant, sodass vorteilhaft eine gleichmäßige Erwärmung des Röstguts erfolgen kann.

In einer bevorzugten Ausführungsform weist die Röstvorrichtung mehrere Heizstäbe auf, wobei die Heizstäbe auf gegenüberliegenden Seiten der Trommel angeordnet sind, wobei bevorzugt auf jeder Seite mindestens ein Heizstab angeordnet ist, wobei weiter bevorzugt auf jeder Seite mindestens zwei Heizstäbe angeordnet sind. Dadurch kann vorteilhaft eine besonders gleichmäßige Röstung erreicht werden, da beide Seiten der Trommel beheizt werden.

Die mindestens zwei Heizstäbe sind bevorzugt vertikal übereinander angeordnet, sodass vorteilhaft eine gleichmäßige Erwärmung des Röstguts erfolgen kann. Weiter bevorzugt sind die mindestens zwei Heizstäbe im gleichen Abstand von der Trommel angeordnet.

Die mindestens zwei Heizstäbe sind bevorzugt parallel übereinander angeordnet, sodass vorteilhaft eine gleichmäßige Erwärmung des Röstguts erfolgen kann.

In einer bevorzugten Ausführungsform ist die Trommel als hohler Kreiszylinder ausgebildet, wobei die Drehachse der Trommel mit der Symmetrieachse des Kreiszylinders zusammenfällt.

Bevorzugt ist die längliche Erstreckung der Trommel größer als die Breite der Trommel.

In einer anderen bevorzugten Ausführungsform ist die Trommel im Betrieb um eine waagerechte Drehachse drehbar ist. Dadurch kann vorteilhaft eine besonders gleichmäßige Röstung erreicht werden, da das Röstgut sich gleichmäßig innerhalb der Trommel verteilen kann.

In einer anderen bevorzugten Ausführungsform ist die Trommel zur Beladung mit Röstgut aus der Röstvorrichtung entnehmbar. Dadurch kann eine besonders bequeme Beladung der Trommel erfolgen.

In einer anderen bevorzugten Ausführungsform ist die Trommel mit einer offenen Seite, insbesondere mit einer offenen Stirnseite, in einer Halterung der Antriebseinrichtung befestigbar. So kann vorteilhaft besonders einfach die Trommel an der offenen Seite mit Röstgut befüllt werden. Die offene Seite wird in der Halterung befestigt und dadurch verschlossen, sodass einerseits eine besonders effiziente Befestigung der Trommel möglich ist und andererseits kein Röstgut während der Drehung aus der Trommel fallen kann. Zudem muss keine Beladeöffnung in der Mantelfläche der Trommel angeordnet werden, wodurch sich die Beladung erheblich vereinfacht.

Die Halterung ist durch die Antriebseinrichtung drehbar und überträgt die Drehung auf die Trommel. Die Trommel wird bevorzugt mit einem Ende der Drehachse in eine Aufnahme der Halterung gesteckt, wodurch sich eine formschlüssige Verbindung ergibt, sodass die Drehung der Aufnahme auf das Ende übertragbar ist.

Zur Entnahme der Trommel kann das Ende aus der Aufnahme herausgezogen werden.

In einer anderen bevorzugten Ausführungsform ist die Trommel im Betrieb mit einer Drehgeschwindigkeit zwischen 20 Umdrehungen pro Minute und 100 Umdrehungen pro Minute antreibbar ist, bevorzugt zwischen 30 und 90 Umdrehungen pro Minute, weiter bevorzugt zwischen 40 und 80 Umdrehungen pro Minute, besonders bevorzugt zwischen 50 und 70 Umdrehungen pro Minute. Hierdurch kann vorteilhaft in besonders kurzer Zeit eine gleichmäßige Röstung erreicht werden.

In einer anderen bevorzugten Ausführungsform ist die Trommel im Betrieb abwechselnd im Uhrzeigersinn und gegen den Uhrzeigersinn antreibbar ist. Durch diese gegenläufige Antriebsmöglichkeit kann in besonders kurzer Zeit eine gleichmäßige Röstung erreicht werden. So kann beispielsweise die Trommel 10-20 sec im Uhrzeigersinn und danach 1-20 sec gegen den Uhrzeigersinn gedreht werden, danach wieder 10-20s sec im Uhrzeigersinn usw.

In einer anderen bevorzugten Ausführungsform ist vorgesehen, dass die Trommel in ihrer dem mindestens einen Heizstab zugewandten Oberfläche (auch Mantelfläche genannt) eine Vielzahl an Öffnungen aufweist. Durch die Öffnungen kann die Wärme besonders gut das Röstgut erreichen, sodass eine schnelle Röstung möglich ist. Bevorzugt sind die Öffnungen kleiner als das Röstgut, sodass das Röstgut nicht durchfallen kann.

In einer bevorzugten Ausführungsform sind bestimmte Heizzonen einstellbar. Weiterhin kann bevorzugt die Drehgeschwindigkeit, die Röstdauer und/oder die Temperatur eingestellt werden.

Hierzu weist die Röstvorrichtung bevorzugt eine Steuerungseinrichtung auf. Dabei kann es sich um einen durch den Bedienen zu betätigen Knopf oder Schieber handeln. Alternativ oder zusätzlich kann die Steuerung auch über eine Software erfolgen, die durch eine Anwendung auf einem Smartphone o.ä. gesteuert werden kann.

In einer anderen bevorzugten Ausführungsform ist vorgesehen, dass die Röstvorrichtung eine Lesevorrichtung aufweist und/oder mit einer Lesevorrichtung verbindbar ist. Die Lesevorrichtung ist bevorzugt ein Scanner. Die Lesevorrichtung ist derart ausgebildet, dass ein Code, bevorzugt ein QR Code, auf einer Verpackung des Röstguts lesbar ist. Dadurch erhält die Röstvorrichtung Informationen über die erforderliche Röstdauer, die automatisch einstellbar ist. Dadurch ist eine automatische Einstellung der optimalen Röstdauer möglich.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen schematisch in:
- Figur 1: eine erfindungsgemäße Röstvorrichtung in einer Draufsicht,
- Figur 2: die Röstvorrichtung in einer perspektivischen Ansicht seitlich von oben,
- Figur 3: die Röstvorrichtung in einer perspektivischen Ansicht von einer Stirnseite,
- Figur 4: die Trommel der Röstvorrichtung von oben,
- Figur 5: die Trommel von der offenen Stirnseite aus, und
- Figur 6: die Röstvorrichtung ohne Trommel.

In den Figuren sind Bauteile mit gleicher oder ähnlicher Funktion mit den gleichen Bezugszeichen gekennzeichnet.

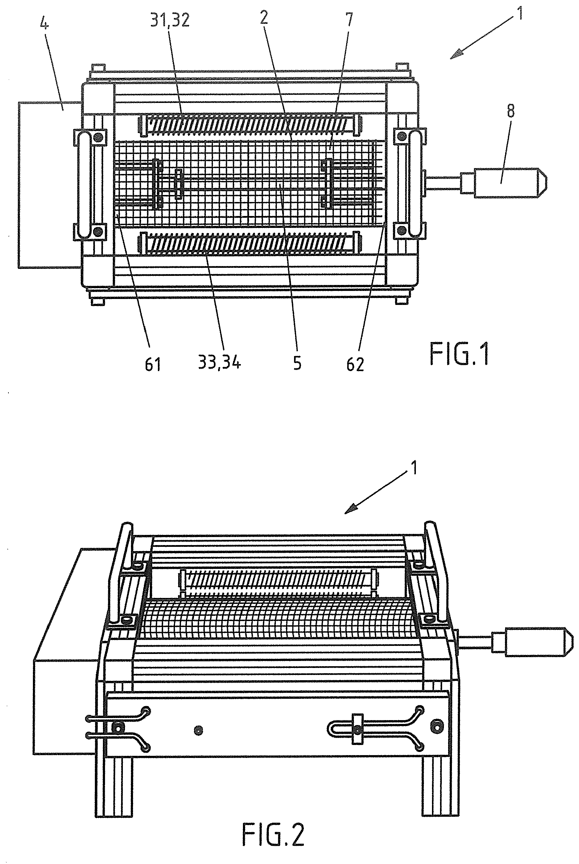

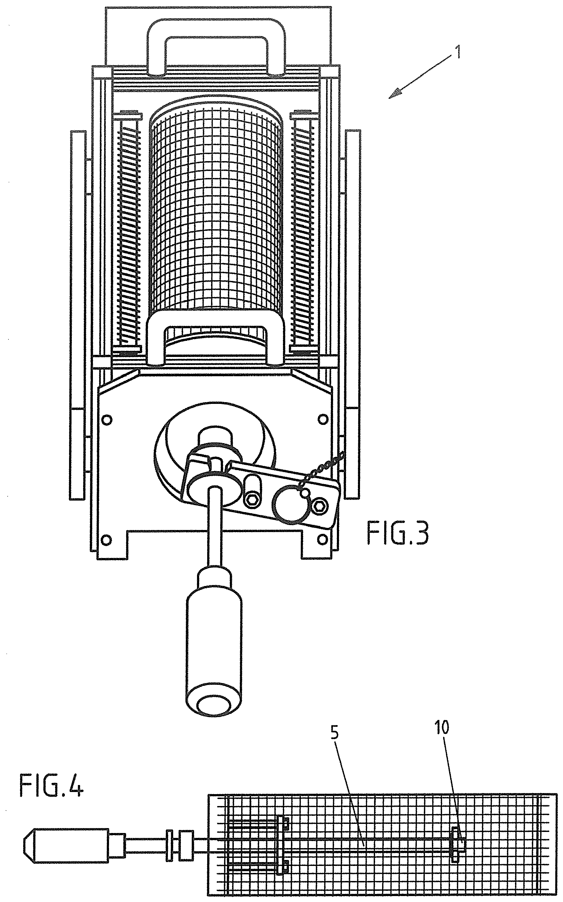

Figur 1 eine erfindungsgemäße Röstvorrichtung 1 in einer Draufsicht, Figuren 2 und 3 zeigen die Röstvorrichtung 1 in perspektivischen Ansichten. Die Röstvorrichtung 1 weist auf eine um eine Drehachse 5 drehbare Trommel 2, vier elektrische Heizstäbe 31,32,33,34, und eine als Elektromotor ausgebildete Antriebseinrichtung 4.

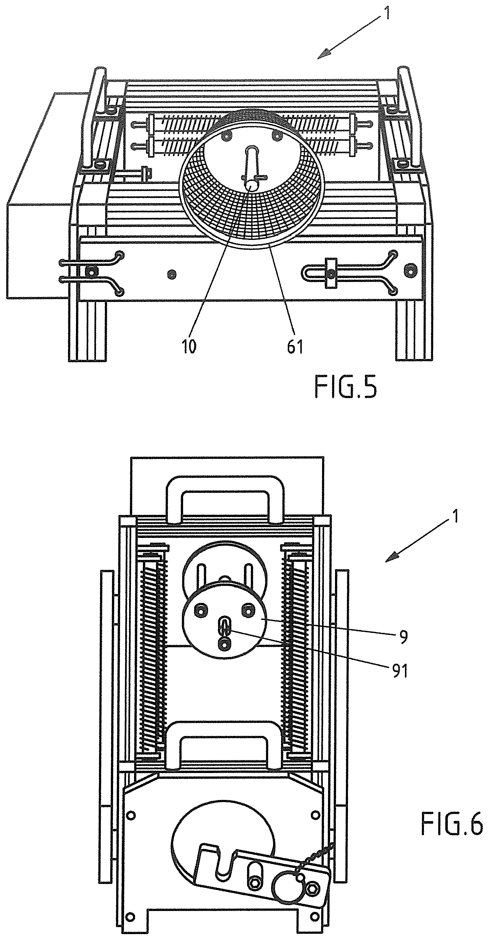

Röstgut wird in die Trommel 2 eingefüllt. Hierzu weist die als hohler Kreiszylinder ausgebildete Trommel 2 eine offene Stirnseite 61 auf (Fig. 4,5). Die andere Stirnseite 61 der Trommel 2 ist geschlossen. Die Trommel 2 weist auf ihrer Mantelfläche eine Vielzahl von Öffnungen 7 von 1-10 mm Größe auf. Die Öffnungen sind so klein, dass das Röstgut nicht herausfallen kann, aber groß genug, dass die Wärme der Heizstäbe 31,32,33,34 das Röstgut erreichen kann.

An der Trommel 2 ist ein Griff 8 angeordnet, mit dem die Trommel 2 aus der Röstvorrichtung 1 entnommen werden kann. Nach Entnahme der Trommel 2 kann Röstgut eingefüllt werden und/oder eine Reinigung der Trommel 2 erfolgen.

Im Betrieb ist die Drehachse 5 der Trommel 2 horizontal angeordnet. Die Trommel 2 dreht sich um ihre Drehachse 5, während die Heizstäbe 31,32,33,34 das Röstgut in der Trommel 2 beheizen. Die Trommel 2 dreht sich mit einer Drehgeschwindigkeit zwischen 20 Umdrehungen pro Minute und 100 Umdrehungen pro Minute.

Die Heizstäbe 31,32,33,34 sind in einem Abstand von 5-30 mm von der Mantelfläche der Trommel 2 angeordnet. Auf jeder Seite der Trommel 2 befinden sich 2 Heizstäbe, nämlich auf der einen Seite Trommel 2 die Heizstäbe 31, 32 und auf der gegenüberliegenden Seite die Heizstäbe 33, 34. Die Heizstäbe 31, 32 bzw. 33, 34 sind vertikal übereinander angeordnet, sodass eine ausreichend große Wärme erzeugt werden kann. Der Heizstab 33 verdeckt den darunter angeordneten Heizstab 34 in den Figuren.

Die Heizstäbe 31,32,33,34 erstrecken sich über fast die gesamte Länge der Trommel 2. Hierbei erstrecken sind die Heizstäbe 31,32,33,34 über mehr als 80% der Länge der Trommel 2.

Figur 6 zeigt die Röstvorrichtung 1 ohne Trommel 2. Die Röstvorrichtung 1 weist eine Halterung 9 für die Trommel 2 auf. Die Halterung 9 ist durch die Antriebseinrichtung 4 drehbar und überträgt die Drehung auf die Trommel 2. Die Trommel 2 wird mit einem Ende 51 der Drehachse 5 in eine Aufnahme 91 der Halterung 9 gesteckt, wodurch sich eine formschlüssige Verbindung ergibt, sodass die Drehung der Aufnahme 91 auf das Ende 51 übertragen werden kann.

Zur Entnahme der Trommel 2 kann das Ende 51 aus der Aufnahme 91 herausgezogen werden.

### Bezugszeichen

- 1: Röstvorrichtung
- 2: Trommel
- 31,32,33,34: Heizstäbe
- 4: Antriebseinrichtung
- 5: Drehachse
- 51: Ende der Drehachse
- 61: offene Stirnseite
- 62: geschlossene Stirnseite
- 7: Öffnungen in Trommel
- 8: Griff
- 9: Halterung
- 91: Aufnahme

## Patentansprüche

1. Röstvorrichtung (1), aufweisend eine Trommel (2) zur Aufnahme von Röstgut, mindestens einen elektrischen Heizstab (31, 32, 33, 34) zur Röstung des Röstguts und eine Antriebseinrichtung (4) zur Drehung der Trommel (2).

2. Röstvorrichtung (1) nach Anspruch 1, aufweisend mehrere Heizstäbe (31. 32, 33, 34), wobei die Heizstäbe (31, 32, 33, 34) auf gegenüberliegenden Seiten der Trommel (2) angeordnet sind, wobei bevorzugt auf jeder Seite mindestens ein Heizstab (31, 32, 33, 34) angeordnet ist, wobei weiter bevorzugt auf jeder Seite mindestens zwei Heizstäbe (31, 32, 33, 34) angeordnet sind.

3. Röstvorrichtung (1) nach mindestens einem der vorhergehenden Ansprüche, wobei die Trommel (3) im Betrieb um eine waagerechte Drehachse (5) drehbar ist.

4. Röstvorrichtung (1) nach mindestens einem der vorhergehenden Ansprüche, wobei die Trommel (3) zur Beladung mit Röstgut aus der Röstvorrichtung (1) entnehmbar ist.

5. Röstvorrichtung (1) nach mindestens einem der vorhergehenden Ansprüche, wobei die Trommel (3) eine offene Seite (61), insbesondere eine offene Stirnseite (61), zur Beladung mit Röstgut aufweist.

6. Röstvorrichtung (1) nach mindestens einem der vorhergehenden Ansprüche, wobei die Trommel (3) mit einer offenen Seite (61), insbesondere mit einer offenen Stirnseite (61), in einer Halterung (9) der Antriebseinrichtung (4) befestigbar ist.

7. Röstvorrichtung (1) nach mindestens einem der vorhergehenden Ansprüche, wobei die Trommel (3) im Betrieb mit einer Drehgeschwindigkeit zwischen 20 Umdrehungen pro Minute und 100 Umdrehungen pro Minute antreibbar ist, bevorzugt zwischen 30 und 90 Umdrehungen pro Minute, weiter bevorzugt zwischen 40 und 80 Umdrehungen pro Minute, besonders bevorzugt zwischen 50 und 70 Umdrehungen pro Minute.

8. Röstvorrichtung (1) nach mindestens einem der vorhergehenden Ansprüche, wobei die Trommel (3) im Betrieb abwechselnd im Uhrzeigersinn und gegen den Uhrzeigersinn antreibbar ist.

9. Röstvorrichtung (1) nach mindestens einem der vorhergehenden Ansprüche, wobei die Trommel (3) in ihrer dem mindestens einen Heizstab (31, 32, 33, 34) zugewandten Oberfläche eine Vielzahl an Öffnungen (7) aufweist.
